# FASCICULE DE BREVET EUROPEEN

(11) **EP 3 300 541 B1**
(45) Date de publication et mention de la délivrance du brevet: **10.03.2021**
(21) Numéro de dépôt: 16809934.9
(22) Date de dépôt: 25.10.2016
(51) Int. Cl.: H02H 3/33, H02H 3/00, H02H 9/04, H02H 9/02

(54) **DISPOSITIF DE PROTECTION DIFFÉRENTIELLE AVEC UNE FONCTION COUPE-FEU**
DIFFERENTIALSCHUTZVORRICHTUNG MIT BRANDSCHUTZFUNKTION
DIFFERENTIAL PROTECTION DEVICE WITH FIRE BREAK FUNCTION

(30) Priorité: 29.10.2015 FR 1560380
(43) Date de publication de la demande: 04.04.2018
(73) Titulaire: HAGER-ELECTRO SAS, 67210 Obernai (FR)
(72) Inventeur: CHETOUANI, Hichem, 67380 Lingolsheim (FR)
(74) Mandataire: Cabinet Nuss
(86) Numéro de dépôt international: PCT/FR2016/052776
(87) Numéro de publication internationale: WO 2017/072442

(56) Documents cités:
- DE-A1- 19 937 061

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentiel intégrant une fonction coupe-feu. Un tel équipement est connu du document DE-A1-19937061.

Ce type de dispositif de protection est couramment intégré dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée : les conducteurs du circuit à protéger, ou les conducteurs de la ligne d'alimentation de ce circuit, passent dans un tore de matériau ferromagnétique d'un transformateur dont les conducteurs précités forment le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, utilisée pour commander directement, ou à travers une électronique dédiée (étages de traitement des signaux), un actionneur (par exemple de type relais). Ce dernier actionne à son tour un mécanisme de déclenchement, de coupure ou d'ouverture associé, ou ceux d'autres appareils de protection de l'installation.

Ces appareils ou dispositifs électriques de protection différentielle peuvent présenter des caractéristiques variables. Ainsi, ils sont différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) alors que d'autres, plus complets, offrent des solutions également applicables au courant continu pulsé (types A et F) et lissé (type B).

Un dispositif du type B est par exemple décrit dans la demande de brevet français n° 2 993 058 au nom de la demanderesse.

Par ailleurs, pour les dispositifs ayant la capacité de détecter des courants de défaut alternatifs, la fréquence limite supérieure de détection constitue un autre critère de distinction entre les différents types : fréquences jusqu'à 1kHz : type F ; fréquences jusqu'à 2kHz : type B ; fréquences jusqu'à 20kHz : type B+.

En particulier, le type B+ est, par rapport aux autres types, spécifiquement sensible aux fréquences de courant de défaut ou de fuite propices aux départs de feu.

Actuellement, les solutions existantes pour atteindre le gabarit fréquentiel requis pour un classement de type B+ sont principalement de deux types :
- mise en œuvre d'un ensemble électronique actif réalisant des corrections adaptées de la bande passante de la courbe de sensibilité à la fréquence du courant de défaut. Un défaut d'alimentation de l'ensemble électronique transforme ce dispositif de type B+ en un dispositif de type A/AC seulement (les fonctionnalités liées au type F ou au type B ne sont plus remplies).
- mise en œuvre d'un relais électronique pour inhiber la protection de type A/AC et son remplacement par un moyen actif réalisant la fonction AC, A, F et B.

Dans les deux solutions précitées, du type B+, on aboutit à une construction complexe, coûteuse et encombrante fondée sur la mise en œuvre de deux circuits indépendants en parallèle ou en concurrence, la fonction coupe-feu étant inopérante en cas d'absence d'alimentation secteur.

La présente invention a pour but de pallier les inconvénients des solutions évoquées précédemment.

A cet effet, elle a pour objet un dispositif de protection différentielle selon la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- les figures 1 à 3 sont des représentations symboliques de trois modes de réalisation différents d'un dispositif de protection différentielle;
- la figure 4 représente des courbes de sensibilité en termes de courant de fuite du dispositif de protection différentielle selon l'invention en fonction de la fréquence, pour différentes valeurs de la résistance R du circuit RC série faisant partie du dispositif représenté sur l'une quelconque des figures 1 à 3 ;
- la figure 5 représente une courbe de même nature que celles représentées sur la figure 4 pour des valeurs déterminées de la capacité C et de la résistance R du circuit RC série, et,
- la figure 6 est une courbe des variations de l'impédance totale Z du circuit RC série, de l'impédance Z_{C} de la capacité C et de l'impédance Z_{R} de la résistance R en fonction de la fréquence, illustrant les contributions relatives de chacune des composantes Z_{C} et Z_{R} à l'impédance Z.

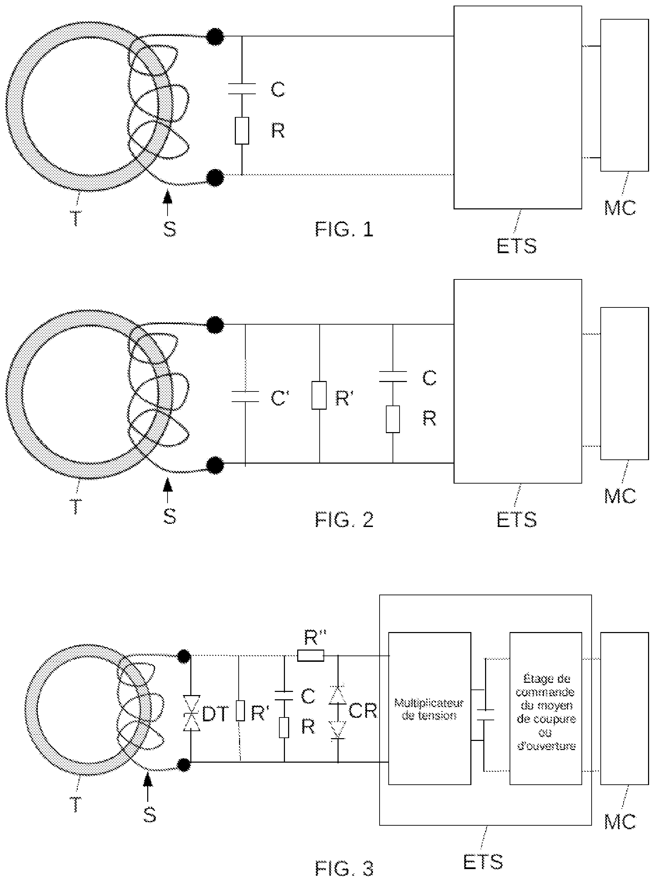

Les figures 1 à 3 illustrent schématiquement et partiellement selon trois variantes de réalisation, un dispositif de protection différentielle permettant la détection de courant de fuite ou de défaut dans une installation électrique alimentée par au moins un conducteur de phase d'un réseau et, le cas échéant, par un conducteur de neutre dudit réseau, au moins deux desdits conducteurs constituant le primaire d'un tore T en matériau ferromagnétique muni d'un ou de plusieurs enroulement(s) secondaire(s) S aux bornes duquel ou de chacun desquels s'établit un signal induit lors de l'apparition d'un défaut différentiel au niveau dudit primaire. Ce signal induit est exploité par au moins un étage de traitement de signaux ETS adapté dudit dispositif pour, en cas de dépassement d'une valeur de seuil prédéfinie, commander un actionneur électromagnétique, un relais ou un moyen de coupure ou d'ouverture analogue MC du dispositif, le(s)dit(s) étage(s) ETS étant relié(s) directement ou non aux bornes du secondaire S considéré.

Le dispositif comprend en outre au moins un circuit RC, formé d'une première résistance R avec une valeur déterminée et d'une première capacité C avec une valeur déterminée montées ensemble en série, ledit circuit RC étant relié aux bornes dudit secondaire S et monté en parallèle et en amont par rapport à l'étage ou aux étages de traitement de signaux ETS.

Ainsi, par ajout d'un circuit RC série, voire d'une simple résistance R lorsqu'une capacité C est déjà présente, à pourvoir un dispositif de protection différentielle de type A, AC, F ou B, d'une fonction additionnelle coupe-feu non dépendante de l'alimentation dudit dispositif.

La solution connue résidant dans l'ajout d'un circuit passif calibré pour adapter la bande passante du dispositif sur lequel il est greffé au gabarit fréquentiel pour réaliser la fonction coupe-feu présente de nombreux avantages:
- non tributaire d'une éventuelle alimentation secteur ;
- aucune consommation supplémentaire notable ;
- coût supplémentaire négligeable ;
- pas de dysfonctionnement lié au vieillissement ;
- encombrement limité ;
- absence de complexification substantielle de la structure du dispositif existant sur lequel est greffé la fonction coupe-feu.

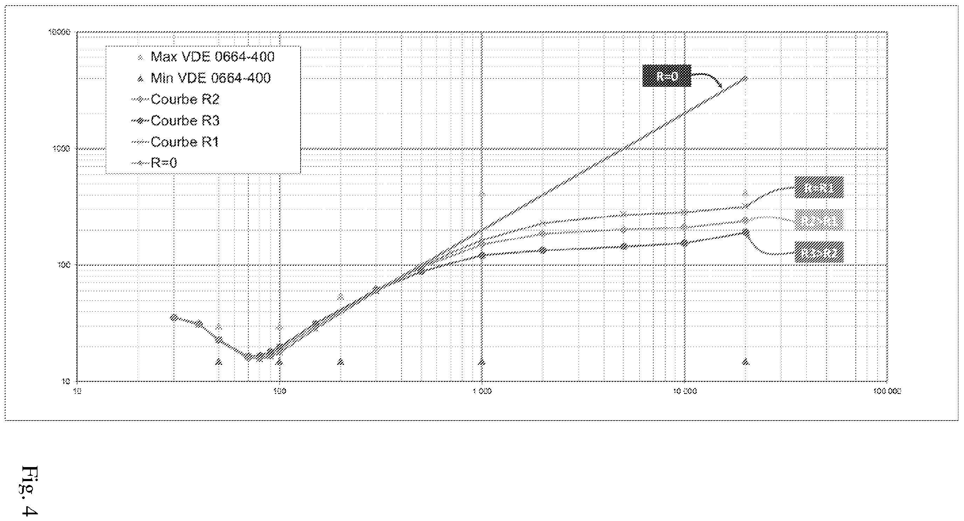

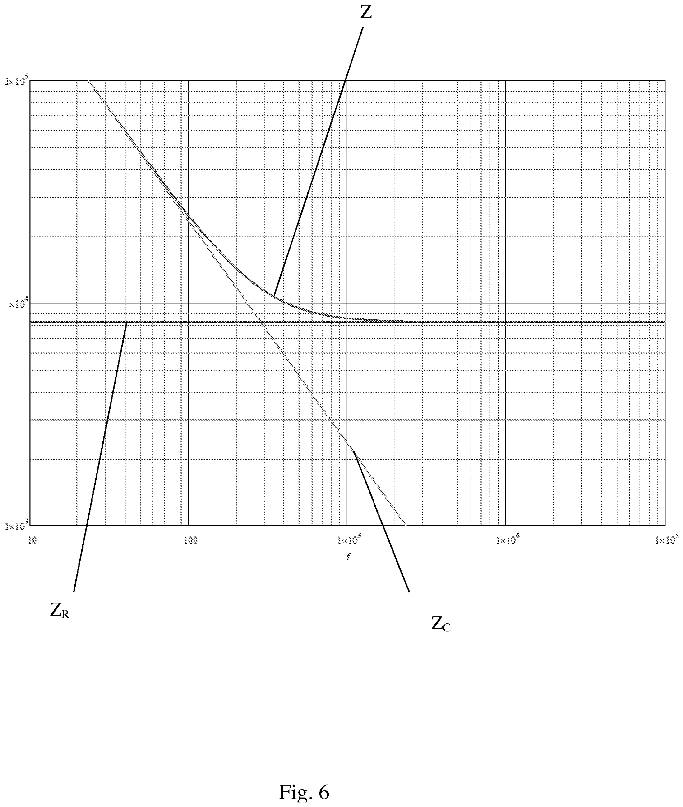

Comme cela ressort des figures 4 et 6, il est prévu selon l'invention que la première résistance R présente une valeur telle que son impédance est prépondérante, dans le circuit RC série, pour des fréquences de signal induit supérieures à environ 300 Hz, préférentiellement supérieures à environ 150 Hz.

Il est connu pour être conforme à la réglementation actuellement en vigueur, et comme le montre graphiquement la figure 4, la première résistance R présente une valeur telle que la valeur seuil de déclenchement pour les valeurs élevées de fréquence du signal induit, typiquement comprises entre 1kHz et 20 kHz, est au plus égale à 420 mA.

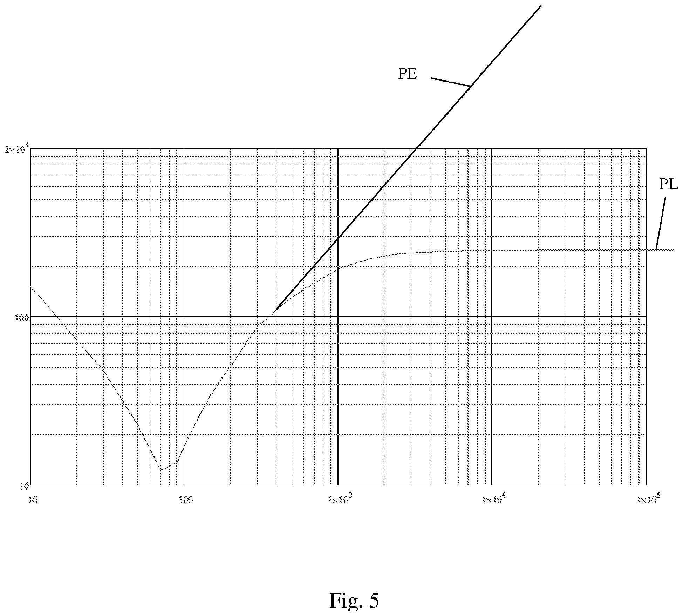

Les figures 4 et 5 montrent graphiquement sur les courbes (variation du seuil de déclenchement en fonction de la fréquence du signal induit), que pour des fréquences supérieures à 100Hz, la pente de la courbe considérée, avant son inflexion pour tendre vers un plateau pour les fréquences supérieures à 10⁴ Hz, est donné par la valeur de la première capacité C, alors que le nouveau dudit plateau est donné par la valeur de la première résistance R (voir droites PE et PL sur la figure 5).

Les courbes de la figure 4 illustrent quant à elles l'influence de la valeur de la première résistance R sur la forme générale (absence de plateau pour R = 0 / présence d'un plateau pour R # 0) ou sur la conformation précise de parties (différentes valeurs du plateau après 1000 Hz environ, en fonction de la valeur de la première résistance R) de la courbe seuil/fréquence.

La figure 6, enfin, illustre pour R = 8,2 x 10³Ω et C = 68 x 10⁻⁹ F, la courbe d'évolution de l'impédance Z du circuit RC série. On peut noter la forme asymptotique de la courbe qui tend vers la valeur de la résistance R pour les hautes fréquences, la résistance R devenant prépondérante par rapport à l'impédance de la capacité C à partir de 300 Hz environ.

L'homme du métier comprend, qu'outre le circuit RC précité, d'autres composants, notamment des composants passifs de protection, d'adaptation, de transformation ou analogues, peuvent être montés entre les bornes du secondaire S et le ou les étage(s) ETS.

Différentes variantes de réalisation non limitatives d'un dispositif de protection différentielle selon l'invention ressortent des figures 2 et 3.

La réalisation connue, sans composant complémentaire, est illustrée sur la figure 1.

Par rapport à cette construction élémentaire, l'invention prévoit que le dispositif comporte au moins une seconde résistance R' reliant les bornes du secondaire S et montée en parallèle par rapport au circuit RC série, lesdits composants R, C, R' constituant ainsi des circuits RC série et parallèle mutuellement imbriqués. Un mode de réalisation envisage que le dispositif de protection comporte au moins une seconde capacité C' reliant les bornes du secondaire S et montée en parallèle par rapport au circuit RC série.

Des valeurs typiques pour ces composants sont, par exemple, R = 6,8 kOhm, R' = 200 kOhm, C = 27nF et C' = 1pF. Ces composants R' et C' ont pour fonction de fixer le seuil du dispositif à 50 Hz environ avec un impact important en fréquence pour C' en cas d'utilisation.

Selon une autre caractéristique de l'invention et comme le montre la figure 3, le dispositif peut comporter, éventuellement en plus de l'un au moins des composants R' et C' précités, au moins une autre résistance R", formant le cas échéant une troisième résistance, montée en série entre l'une des bornes du secondaire S, d'une part, et l'entrée du ou des étage(s) de traitement des signaux ETS, d'autre part. Cette résistance optionnelle R", dont la valeur peut par exemple être de l'ordre de 1 kOhm, a pour fonction de limiter le courant au secondaire.

En relation avec le mode de réalisation représenté figure 3, et en accord avec une autre caractéristique, le dispositif selon l'invention peut comprendre, en outre, au moins l'un des composants additionnels suivants, notamment à titre de protection contre les surtensions, monté(s) en amont du ou des étage(s) de traitement de signaux ETS :
- une diode DT du type diode Transil, montée entre les bornes du secondaire S en amont de tout autre composant relié audit secondaire,
- un circuit CR redresseur de tension, par exemple à diodes, monté en parallèle, préférentiellement immédiatement en amont du ou des étage(s) de traitement des signaux ETS.

La figure 3 détaille, en outre, les possibles composantes fonctionnelles constitutives de l'étage ou des étages ETS, ce(s) derniers(s) réalisant une fonction de protection différentielle du type choisi dans le groupe formé par les types A, AC, F et B.

La présente invention porte également sur un interrupteur différentiel, sur un disjoncteur différentiel et sur un contrôleur d'isolement, chacun de ces derniers étant caractérisé en ce qu'il intègre au moins un dispositif de protection différentielle selon l'invention.

Bien entendu, l'invention n'est pas limitée aux modes de réalisation décrit et représentés aux dessins annexés. L'invention est uniquement définit par les revendications ajoutées.

## Revendications

1. Dispositif de protection différentielle permettant la détection de courant de fuite ou de défaut dans une installation électrique alimentée par au moins un conducteur de phase d'un réseau et, le cas échéant, par un conducteur de neutre dudit réseau, au moins deux desdits conducteurs constituant le primaire d'un tore (T) en matériau ferromagnétique muni d'un ou de plusieurs enroulement(s) secondaire(s) (S) aux bornes duquel ou de chacun desquels s'établit un signal induit lors de l'apparition d'un défaut différentiel au niveau dudit primaire, ledit signal induit étant exploité par au moins un étage de traitement de signaux (ETS) adapté dudit dispositif pour, en cas de dépassement d'une valeur de seuil prédéfinie, commander un actionneur électromagnétique, un relais ou un moyen de coupure ou d'ouverture analogue (MC) du dispositif, le(s)dit(s) étage(s) (ETS) étant relié(s) directement ou non aux bornes du secondaire (S) considéré,
ledit dispositif comprenant au moins un circuit RC, formé d'une première résistance (R) avec une valeur déterminée et d'une première capacité (C) avec une valeur déterminée montées ensemble en série, ledit circuit RC étant relié aux bornes dudit secondaire (S) et monté en parallèle et en amont par rapport à l'étage ou aux étages de traitement de signaux (ETS),
la première résistance (R) présentant une valeur telle que la valeur seuil de déclenchement pour les valeurs élevées de fréquence du signal induit, typiquement comprises entre 1kHz et 20 kHz, est au plus égale à 420 mA,
ledit dispositif de protection différentielle est **caractérisé en ce que** la première résistance (R) présente une valeur telle que son impédance est prépondérante, dans le circuit RC série, pour des fréquences de signal induit supérieures à environ 300 Hz, préférentiellement supérieures à environ 150 Hz, et
**en ce que** ledit dispositif de protection différentielle comporte au moins une seconde résistance (R') reliant les bornes du secondaire (S) et montée en parallèle par rapport au circuit RC série, lesdits composants (R, C, R') constituant ainsi des circuits RC série et parallèle mutuellement imbriqués.

2. Dispositif de protection différentielle selon la revendication 1, **caractérisé en ce qu'**il comporte au moins une seconde capacité (C') reliant les bornes du secondaire (S) et montée en parallèle par rapport au circuit RC série.

3. Dispositif de protection différentielle selon l'une quelconque des revendications 1 à 2, **caractérisé en ce qu'**il comporte au moins une autre résistance (R"), formant le cas échéant une troisième résistance, montée en série entre l'une des bornes du secondaire (S), d'une part, et l'entrée du ou des étage(s) de traitement des signaux (ETS), d'autre part.

4. Dispositif de protection différentielle selon l'une quelconque des revendications 1 à 3, **caractérisé en ce qu'**il comprend en outre au moins l'un des composants additionnels suivants, monté(s) en amont du ou des étage(s) de traitement de signaux (ETS) :
- une diode (DT) du type diode Transil, montée entre les bornes du secondaire (S) en amont de tout autre composant relié audit secondaire,
- un circuit (CR) redresseur de tension, par exemple à diodes, monté en parallèle, préférentiellement immédiatement en amont du ou des étage(s) de traitement des signaux (ETS).

5. Dispositif de protection différentielle selon l'une quelconque des revendications 1 à 4, **caractérisé en ce que** l'étage ou les étages de traitement des signaux (ETS) réalise(nt) une fonction de protection différentielle du type choisi dans le groupe formé par les types A, AC, F et B.

6. Interrupteur différentiel, **caractérisé en ce qu'**il intègre au moins un dispositif de protection différentielle selon l'une quelconque des revendications 1 à 5.

7. Disjoncteur différentiel, **caractérisé en ce qu'**il intègre au moins un dispositif de protection différentielle selon l'une quelconque des revendications 1 à 5.

8. Contrôleur d'isolement, **caractérisé en ce qu'**il intègre au moins un dispositif de protection différentielle selon l'une quelconque des revendications 1 à 5.

## Patentansprüche

1. Differentialschutzvorrichtung, welche die Detektion eines Leck- oder Fehlerstroms in einer elektrischen Anlage ermöglicht, die durch wenigstens einen Phasenleiter eines Netzes und gegebenenfalls durch einen Neutralleiter dieses Netzes gespeist wird, wobei wenigstens zwei der Leiter die Primärwicklung eines Ringkerns (T) aus ferromagnetischem Material bilden, der mit einer oder mehreren Sekundärwicklung(en) (S) versehen ist, an deren Klemmen bzw. jeweiligen Klemmen ein Signal anliegt, das beim Auftreten eines Differentialfehlers an der Primärwicklung induziert wird, wobei das induzierte Signal von wenigstens einer angepassten Signalverarbeitungsstufe (ETS) der Vorrichtung ausgewertet wird, um im Fall einer Überschreitung eines vordefinierten Schwellenwertes einen elektromagnetischen Aktuator, ein Relais oder ein analoges Unterbrechungs- oder Öffnungsmittel (MC) der Vorrichtung anzusteuern, wobei die Stufe(n) (ETS) mit den Klemmen der betreffenden Sekundärwicklung (S) direkt verbunden ist (sind) oder nicht,
wobei die Vorrichtung wenigstens eine RC-Schaltung umfasst, die von einem ersten Widerstand (R) mit einem bestimmten Wert und einer ersten Kapazität (C) mit einem bestimmten Wert gebildet wird, die zusammen in Reihe geschaltet sind, wobei die RC-Schaltung mit den Klemmen der Sekundärwicklung (S) verbunden ist und in Bezug auf die Signalverarbeitungsstufe oder -stufen (ETS) parallelgeschaltet und vorgeschaltet ist,
wobei der erste Widerstand (R) einen solchen Wert aufweist, dass der Auslöseschwellenwert für die hohen Frequenzwerte des induzierten Signals, die typischerweise zwischen 1 kHz und 20 kHz liegen, höchstens gleich 420 mA ist,
wobei die Differentialschutzvorrichtung **dadurch gekennzeichnet ist, dass** der erste Widerstand (R) einen solchen Wert aufweist, dass seine Impedanz in der RC-Schaltung für Frequenzen des induzierten Signals, die höher als ungefähr 300 Hz, vorzugsweise höher als ungefähr 150 Hz sind, ausschlaggebend ist, und
dadurch, dass die Differentialschutzvorrichtung wenigstens einen zweiten Widerstand (R') aufweist, der die Klemmen der Sekundärwicklung (S) verbindet und zu der RC-Reihenschaltung parallelgeschaltet ist, wobei die Komponenten (R, C, R') somit RC-Reihen- und -Parallelschaltungen bilden, die miteinander verschachtelt sind.

2. Differentialschutzvorrichtung nach Anspruch 1, **dadurch gekennzeichnet, dass** sie wenigstens eine zweite Kapazität (C') aufweist, welche die Klemmen der Sekundärwicklung (S) verbindet und zu der RC-Reihenschaltung parallelgeschaltet ist.

3. Differentialschutzvorrichtung nach einem der Ansprüche 1 bis 2, **dadurch gekennzeichnet, dass** sie wenigstens einen weiteren Widerstand (R") aufweist, der gegebenenfalls einen dritten Widerstand bildet, der zwischen einer der Klemmen der Sekundärwicklung (S) einerseits und dem Eingang der Signalverarbeitungsstufe(n) (ETS) andererseits in Reihe geschaltet ist.

4. Differentialschutzvorrichtung nach einem der Ansprüche 1 bis 3, **dadurch gekennzeichnet, dass** sie außerdem wenigstens eine der folgenden zusätzlichen Komponenten umfasst, die der oder den Signalverarbeitungsstufe(n) (ETS) vorgeschaltet ist (sind):
- eine Diode (DT) vom Typ einer Suppressordiode, die zwischen die Klemmen der Sekundärwicklung (S) geschaltet ist, so dass sie jeder anderen mit der Sekundärwicklung verbundenen Komponente vorgeschaltet ist,
- eine Spannungsgleichrichterschaltung (CR), zum Beispiel mit Dioden, die zu der oder den Signalverarbeitungsstufe(n) (ETS) parallelgeschaltet und ihr (ihnen) vorzugsweise unmittelbar vorgeschaltet ist.

5. Differentialschutzvorrichtung nach einem der Ansprüche 1 bis 4, **dadurch gekennzeichnet, dass** die Signalverarbeitungsstufe oder -stufen (ETS) eine Differentialschutzfunktion des Typs erfüllt (erfüllen), der aus der Gruppe ausgewählt ist, die von den Typen A, AC, F und B gebildet wird.

6. Differentialschalter, **dadurch gekennzeichnet, dass** wenigstens eine Differentialschutzvorrichtung nach einem der Ansprüche 1 bis 5 in ihn integriert ist.

7. Fehlerstromschutzschalter, **dadurch gekennzeichnet, dass** wenigstens eine Differentialschutzvorrichtung nach einem der Ansprüche 1 bis 5 in ihn integriert ist.

8. Isolationswächter, **dadurch gekennzeichnet, dass** wenigstens eine Differentialschutzvorrichtung nach einem der Ansprüche 1 bis 5 in ihn integriert ist.

## Claims

1. Differential protection device allowing the detection of leakage or fault current in an electrical installation supplied with power by at least one phase conductor of a network and, where applicable, by a neutral conductor of said network, at least two of said conductors constituting the primary of a torus (T) made of ferromagnetic material provided with one or more secondary windings (S) across the terminals of which or of each of which is established an induced signal upon the occurrence of a differential fault on said primary, said induced signal being used by at least one suitable signal processing stage (ETS) of said device for, in the event of a predefined threshold value being exceeded, controlling an electromagnetic actuator, a relay or an analogous breaking or opening means (MC) of the device, said one or more stages (ETS) being connected directly or indirectly to the terminals of the secondary (S) in question,
said device comprising at least one RC circuit, formed of a first resistor (R) with a determined value and of a first capacitor (C) with a determined value that are connected together in series, said RC circuit being connected to the terminals of said secondary (S) and connected in parallel with and upstream with respect to the one or more signal processing stages (ETS),
the first resistor (R) having a value such as the trip threshold value for the high values of the frequency of the induced signal, typically between 1 kHz and 20 kHz, is at most equal to 420 mA,
said differential protection device is **characterized in that** the first resistor (R) has a value such that its impedance is preponderant, in the series RC circuit, for frequencies of the induced signal that are higher than approximately 300 Hz, preferably higher than approximately 150 Hz, and
**in that** the differential protection device comprises at least one second resistor (R') connecting the terminals of the secondary (S) and connected in parallel with respect to the series RC circuit, said components (R, C, R') thus constituting mutually nested series and parallel RC circuits.

2. Differential protection device according to Claim 1, **characterized in that** it comprises at least one second capacitor (C') connecting the terminals of the secondary (S) and connected in parallel with respect to the series RC circuit.

3. Differential protection device according to either one of Claims 1 and 2, **characterized in that** it comprises at least one other resistor (R"), forming, where applicable, a third resistor, connected in series between one of the terminals of the secondary (S), on the one hand, and the input of the one or more signal processing stages (ETS), on the other hand.

4. Differential protection device according to any one of Claims 1 to 3, **characterized in that** it further comprises at least one of the following additional components, connected upstream of the one or more signal processing stages (ETS):
- a diode (DT) of transil-diode type, connected between the terminals of the secondary (S) upstream of any other component connected to said secondary,
- a voltage rectifier circuit (CR), for example using diodes, which is connected in parallel, preferably immediately upstream of the one or more signal processing stages (ETS).

5. Differential protection device according to any one of Claims 1 to 4, **characterized in that** the one or more signal processing stages (ETS) perform a differential protection function of the type chosen from the group formed by the types A, AC, F and B.

6. Differential switch, **characterized in that** it incorporates at least one differential protection device according to any one of Claims 1 to 5.

7. Differential circuit breaker, **characterized in that** it incorporates at least one differential protection device according to any one of Claims 1 to 5.

8. Insulation monitor, **characterized in that** it incorporates at least one differential protection device according to any one of Claims 1 to 5.
